# FASCICULE DE BREVET EUROPEEN

(11) **EP 3 510 390 B1**
(45) Date de publication et mention de la délivrance du brevet: **14.07.2021**
(21) Numéro de dépôt: 17797529.9
(22) Date de dépôt: 16.10.2017
(51) Int. Cl.: G01N 27/414

(54) **CAPTEUR DE DETECTION AVEC CELLULE DE CAPTAGE A TRANSISTOR A HAUTE MOBILITE ELECTRONIQUE (HEMT) ET ANNEAUX RESONATEURS**
DETEKTIONSSENSOR MIT ERFASSENDER ZELLE MIT EINEM TRANSISTOR MIT HOHER ELEKTRONENMOBILITÄT (HEMT) UND RINGRESONATOREN
DETECTION SENSOR WITH CAPTURING CELL HAVING A HIGH-ELECTRON-MOBILITY TRANSISTOR (HEMT) AND RING RESONATORS

(43) Date de publication de la demande: 17.07.2019
(73) Titulaire: CENTRE NATIONAL DE LA RECHERCHE SCIENTIFIQUE, 75016 Paris (FR); Georgia Tech Lorraine, 57070 Metz (FR)
(72) Inventeur: AUBRY, Vincent, 91400 Orsay (FR); OUGAZZADEN, Abdallah, 51156 Marly (FR); SALVESTINI, Jean-Paul, 57070 Metz (FR); VOSS, Paul, 57000 Metz (FR); HALFAYA, Yacine, 57070 Metz (FR)
(74) Mandataire: IPAZ
(86) Numéro de dépôt international: PCT/EP2017/076379
(87) Numéro de publication internationale: WO 2019/076437

(56) Documents cités:
- CN-A- 104 614 403
- FR-A1- 3 056 751
- KIM BYUNG-HYUN ET AL: "A gas sensor using double split-ring resonator coated with conducting polymer at microwave frequncies", IEEE SENSORS 2014 PROCEEDINGS, IEEE, 2 novembre 2014 (2014-11-02), pages 1815-1818, XP032705568, DOI: 10.1109/ICSENS.2014.6985379 [extrait le 2014-12-12]
- BISHOP CHRIS ET AL: "Experimental Study and Device Design of NO, NO2, and NH3 Gas Detection for a Wide Dynamic and Large Temperature Range Using Pt/AlGaN/GaN HEMT", IEEE SENSORS JOURNAL, IEEE SERVICE CENTER, NEW YORK, NY, US, vol. 16, no. 18, 15 septembre 2016 (2016-09-15), pages 6828-6838, XP011620162, ISSN: 1530-437X, DOI: 10.1109/JSEN.2016.2593050 [extrait le 2016-08-15]

## Description

L'invention concerne un capteur sans fil de détection ou de mesure d'un composant spécifique présent dans un mélange gazeux ou liquide, le capteur sans fil comportant une cellule de captage à transistor à haute mobilité électronique et au moins un anneau résonateur.

Un transistor à haute mobilité électronique, aussi connu sous l'acronyme anglo-saxon de HEMT pour « High Electron Mobility Transistor » comprend une source et un drain avec une grille intercalée entre la source et le drain. Le fonctionnement de la cellule de captage est basé sur la conductance entre deux contacts ohmiques que sont la source et le drain, par l'action électrostatique d'une électrode de commande qui est la grille.

Dans ce qui va suivre, il va être développé une application préférentielle du capteur sans fil selon la présente invention comme capteur de détection d'un élément polluant présent dans les gaz d'échappement évacués d'un moteur à combustion interne par une ligne d'échappement de véhicule automobile. Cette application n'est pas limitative de la présente invention.

Il est connu que les gaz d'échappement des véhicules contiennent de nombreux composants chimiques dont certains sont nocifs pour la santé des individus et dont certains le sont pour l'environnement. Pour limiter ces nuisances pour l'environnement et la santé, des réglementations ont été mises en place en Europe, aux Etats-Unis et au Japon pour la mesure et/ou la détection de ces composants chimiques.

Concernant les oxydes d'azote faisant partie de ces composants chimiques dangereux, ci-après désignés par leur formule chimique NO_{X}, les limites d'émission seront de plus en plus sévères et elles seront probablement spécifiques aux différents oxydes d'azote dont NO, NO₂, N₂O, etc., alors qu'actuellement les NO_{X} sont réglementés de manière globale.

Les capteurs actuellement utilisés pour les gaz des échappements automobiles sont les capteurs NO_{X} et les sondes O₂, aussi connu sous l'appellation de sonde lambda. Ils sont basés sur le principe de fonctionnement des électrolytes solides et la loi de Nernst, et sont à base d'oxyde de zirconium dopé à l'Yttrium.

Ces capteurs NO_{X} ne sont pas sélectifs entre les différents gaz et détectent une concentration globale correspondant aux gaz NO₂, NO, N₂O, NH₃. De plus, leur temps de réponse est élevé et ces capteurs sont relativement chers.

Différentes autres technologies de capteurs gaz existent tels que des capteurs optiques, capteurs métal oxyde, capteurs acoustiques, capteurs gravimétriques, etc. Mais aujourd'hui, il n'existe pas de capteurs sensibles, rapides, à bas coût, résistants à l'environnement d'un échappement automobile et sélectif aux différentes espèces gazeuses telles que O₂, H₂, NO₂, NO, N₂O, CO, CO₂.

Une nouvelle génération de capteurs sélectifs entre les gaz est donc nécessaire pour être conforme à cette évolution des réglementations. De plus, un capteur permettant de déterminer séparément la concentration d'ammoniac ou NH₃ et le ratio NO/NO₂ permettrait d'améliorer la régulation d'un système de réduction catalytique sélective aussi connu sous l'abréviation RCS réduisant les NOₓ par injection de NH₃ résultant de la décomposition d'un agent réducteur sous forme initiale d'un mélange à base d'urée.

Dans ce contexte, il a été conduit des travaux concernant le développement de capteurs de gaz à base de semi-conducteurs nitrure (III-N). Les semi-conducteurs à base de matériaux III-N sont des matériaux à large bande interdite ce qui les rend intéressants pour des applications de capteur de gaz. Leur stabilité thermique et leur tension de claquage élevée les rendent adaptés à des applications à haute température, ce qui est le cas par exemple pour les lignes d'échappement et/ou les moteurs à combustion interne pour des véhicule automobiles.

La mesure de ces capteurs se fait sans fil. Une telle mesure des gaz d'échappement avec des capteurs sans fil apporte des avantages essentiels. En effet, l'environnement des gaz d'échappement est très contraint au niveau des très hautes températures rencontrées.

Supprimer les contacts électriques permet d'éviter les contraintes de coûts associés aux connecteurs nécessaires. De plus, la tenue dans l'environnement à haute température de ces connecteurs peut être le facteur limitant en température et non la capacité du capteur lui-même.

Les capteurs sans fil peuvent opérer également dans les milieux liquides ou d'accès difficile et peuvent aussi permettre de mesurer des contenus liquides. Cela permet également de réduire l'encombrement des capteurs, ceux-ci ne nécessitant plus de connecteurs.

Cependant les capteurs sans fil de mesure et/ou de détection d'un composant à l'intérieur d'un mélange liquide ou gazeux peuvent être améliorés notamment en ce qui concerne la sélectivité du composant à détecter devant concerner uniquement ce composant.

Un transistor à haute mobilité électronique peut être utilisé dans un autre domaine que pour un capteur de mesure ou de détection d'un composant dans un mélange liquide ou gazeux. Par exemple, le document WO-A-2015/188736 décrit un transistor à haute mobilité électronique qui ne fait pas partie d'un capteur de mesure mais est associé à un anneau résonateur fendu agissant sur la modulation du transistor.
Bishop Chris et al, "Expérimental Study and Device Design of NO, NO2, and NH3 Gas Détection for a Wide Dynamic and Large Temperature Range Using Pt/AlGaN/GaNHEMT", IEEE Sensors, Journal, vol. 16, no. 18, p. 6828-6838, 15 septembre 2016 décrit un capteur de gaz comprenant au moins une cellule de captage à transistor à haute mobilité électronique comportant une source et un drain avec une grille intercalée entre source et drain. Byung-Hyun, Kim et al , "A gas sensor using double split-ring resonator coated with conducting polymer at microwave frequencies", IEEE Sensors 2014 Proceedings, p. 1815-1818, 2 novembre 2014 décrit un capteur de gaz utilisant un résonateur à double anneau fendu (DSRR) recouvert d'un polymère conducteur à des fréquences de micro-ondes.

Jusqu'à présente, aucune proposition n'a été faite dans l'état de la technique pour rendre plus sélectifs la détection ou la mesure de composants dans un mélange gazeux ou liquide par de tels capteurs.

Par conséquent, le problème à la base de la présente est, pour un capteur sans fil de détection et/ou de mesure d'un composant contenu dans un mélange gazeux ou liquide ou liquide, le capteur comprenant une cellule de captage avec un transistor à haute mobilité électronique, de détecter et/ou de mesurer avec précision ce composant contenu de manière sélective par rapport aux autres composants différents présents dans le mélange gazeux ou liquide.

Pour atteindre cet objectif, il est prévu selon l'invention un capteur sans fil de détection ou de mesure d'au moins un composant spécifique présent dans un mélange gazeux ou liquide, le capteur de gaz comprenant au moins une cellule de captage à transistor à haute mobilité électronique comportant une source et un drain avec une grille intercalée entre source et drain, caractérisé en ce que ladite au moins une cellule de captage à transistor à haute mobilité électronique est associée au moins un anneau résonateur fendu d'au moins une fente respective et connecté entre, d'une part, le drain et, d'autre part, la grille ou la source de ladite au moins une cellule de captage, le capteur détectant un changement d'intensité ou de fréquence de résonance en fonction de la présence et/ou de la concentration dudit au moins un composant spécifique dans le mélange gazeux ou liquide.

L'effet technique est d'obtenir un capteur de gaz ou de liquide sans fil par intégration d'au moins un transistor à haute mobilité électronique associé avec au moins un anneau résonateur fendu, avantageusement au moins deux anneaux résonateurs fendus. Cet anneau résonateur fendu est un type de méta-matériau permettant de tirer profit de la résonance électromagnétique.

Ce type de résonance est utilisé dans différents types de dispositifs électroniques mais n'a jamais été appliqué pour des capteurs comprenant un transistor à haute mobilité électronique ou une diode dite de Schottky.

L'anneau résonateur fendu agit comme un circuit résonant de type LC, résonant à une fréquence spécifique qui réagit en guide d'ondes en bloquant à cette fréquence les transmissions électromagnétiques, ceci inversement à un anneau résonateur fermé qui ne montre pas de fréquence de résonance.

Le ou les anneaux résonateurs fendus sont soit connectés avec la source et le drain du transistor à haute mobilité électronique pour provoquer une variation de l'intensité de résonance ou soit connectés entre la source et la grille du transistor causant un décalage de la fréquence de résonance.

La deuxième configuration a un potentiel important pour augmenter la sensibilité du capteur car un décalage de 10Mhz peut être obtenu et ce décalage peut être ainsi mesuré par des appareils très simples.

Avantageusement, l'intensité ou la fréquence de résonance est fonction d'un ou des paramètres suivants pris unitairement ou en combinaison :
- d'une dimension de ladite au moins une fente dudit au moins un anneau résonateur fendu,
- d'une ou de dimensions du matériau constitutif dudit au moins un anneau résonateur fendu,
- quand ledit au moins un anneau résonateur fendu présente plusieurs fentes, d'un nombre de fentes pour ledit au moins un anneau résonateur fendu et,
- quand le capteur présente au moins deux anneaux résonateurs fendus, d'un nombre et d'une disposition des anneaux résonateurs fendus l'un par rapport à l'autre.

Ainsi, en sélectionnant un ou des paramètres spécifiques, il peut être obtenu un capteur qui soit ciblé sélectivement sur un composant à détecter ou à mesurer avec une intensité ou une fréquence de résonance spécifique.

Dans un mode préférentiel de réalisation de la présente invention, le capteur présente au moins deux anneaux résonateurs fendus et ladite au moins une cellule de captage à transistor à haute mobilité électronique est insérée dans ladite au moins une fente d'un desdits au moins deux anneaux résonateurs fendus.

Avantageusement, ladite au moins une cellule de captage à transistor à haute mobilité électronique est insérée dans ladite au moins une fente de l'anneau résonateur fendu le plus interne desdits au moins deux anneaux résonateurs fendus.

Dans un autre mode préférentiel de réalisation de la présente invention, le capteur présente au moins deux anneaux résonateurs fendus et ladite au moins une cellule de captage à transistor à haute mobilité électronique est insérée entre lesdits au moins deux anneaux résonateurs fendus.

Pour les deux modes préférentiels, c'est-à-dire une cellule de captage à transistor à haute mobilité électronique insérée soit dans une fente d'un anneau résonateur fendu ou entre au moins deux anneaux résonateurs fendus, puisque la valeur de la capacité du capteur à transistor à haute mobilité électronique varie en fonction de la présence du composant, un tel positionnement du transistor à haute mobilité électronique fait varier la fréquence de résonance de la structure à anneaux résonateurs fendus.

Dans ces modes, une faible variation de la capacité se traduit par un large décalage de fréquence, ce qui accroît la sensibilité de mesure du capteur. Ces modes présentent également l'avantage de n'avoir que les contacts avec entre, d'une part, la structure transistor et anneaux et, d'autre part, le capteur.

Avantageusement, ladite au moins une cellule de captage à transistor à haute mobilité électronique est sous forme d'une couronne concentrique auxdits au moins deux anneaux résonateurs fendus.

Avantageusement, ladite au moins une cellule de captage à transistor à haute mobilité électronique est de forme rectangulaire, carrée ou en portion de couronne.

Avantageusement, le capteur présente au moins deux anneaux résonateurs fendus concentriques en présentant un centre commun et lesdites au moins une fente desdits au moins deux anneaux résonateurs fendus sont alignées selon un diamètre de l'anneau résonateur fendu le plus externe desdits au moins deux anneaux résonateurs fendus, le centre commun desdits au moins deux anneaux résonateurs fendus se trouvant intercalé dans l'alignement entre lesdites au moins une fente des deux anneaux résonateurs fendus.

L'invention concerne aussi un ensemble d'au moins deux capteurs sans fil de détection ou de mesure, chaque capteur détectant un composant spécifique respectif présent dans un mélange gazeux ou liquide, caractérisé en ce que lesdits au moins deux capteurs sont tels que précédemment mentionné, chacun desdits au moins deux capteurs présentant un changement d'intensité ou de fréquence de résonance en fonction de la présence et/ou de la concentration du composant spécifique respectif de chaque capteur dans le mélange gazeux ou liquide.

Il est ainsi procédé à une détection ou une mesure indirecte pouvant supporter des températures plus élevées que tolérées dans un système actuel avec contacts. Le fait de ne plus avoir de contacts permet à surface identique d'augmenter la surface de réaction de la zone sensible aux gaz.

Les capteurs à transistor à haute mobilité électronique peuvent être conçus afin d'être sensibles à des molécules de composant spécifiques sur une seule puce électronique avec différents accords de fréquence respectifs.

L'invention concerne enfin une ligne d'échappement d'un moteur de combustion interne de véhicule automobile, caractérisée en ce qu'elle comprend un tel capteur ou un tel ensemble d'au moins deux capteurs sans fil de détection ou de mesure, le mélange gazeux ou liquide étant formé par des gaz d'échappement traversant la ligne d'échappement et ledit au moins un composant spécifique ou lesdits au moins deux composants spécifiques étant respectivement un ou des gaz contenus dans les gaz d'échappement, notamment des gaz dont la teneur est réglementée, par exemple des NOx.

Les avantages de la solution proposée par la présente invention sont une détection ou mesure sélective entre les différents composants ou polluants présents dans les gaz d'échappement de la ligne, un temps de réponse amélioré et une diminution du coût de la détection ou de la mesure.

D'autres caractéristiques, buts et avantages de la présente invention apparaîtront à la lecture de la description détaillée qui va suivre et au regard des dessins annexés donnés à titre d'exemples non limitatifs et sur lesquels :

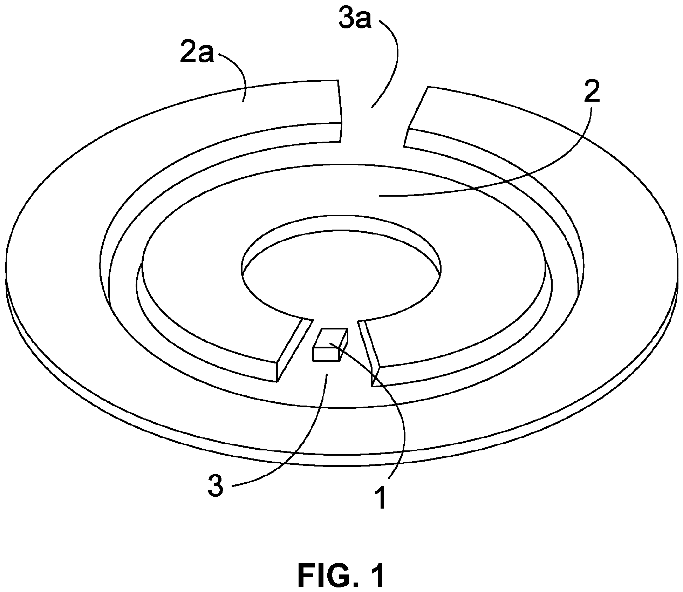

- la figure 1 est une représentation schématique d'un premier mode de réalisation d'un capteur selon la présente invention, le capteur présentant, d'une part, une cellule de captage comprenant un transistor à haute mobilité électronique et, d'autre part, deux anneaux résonateurs fendus concentriques, le transistor à haute mobilité électronique étant inséré dans la fente de l'anneau le plus interne des deux anneaux résonateurs fendus,

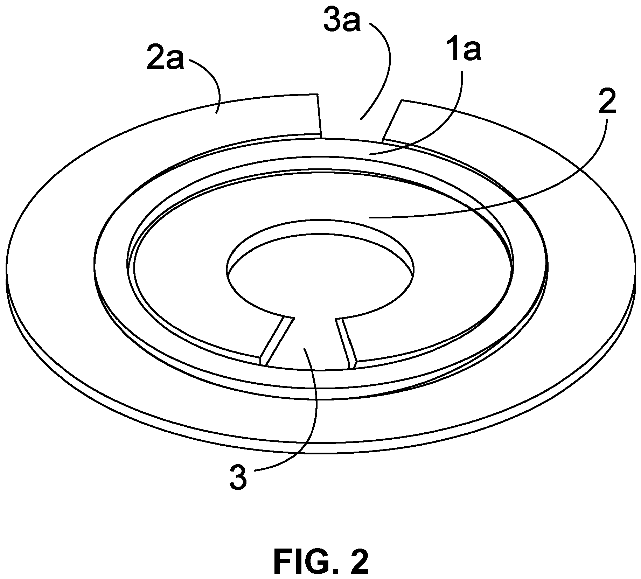

- la figure 2 est une représentation schématique d'un deuxième mode de réalisation d'un capteur selon la présente invention, le capteur présentant, d'une part, une cellule de captage comprenant un transistor à haute mobilité électronique et, d'autre part, deux anneaux résonateurs fendus concentriques, le transistor à haute mobilité électronique étant sous forme d'une couronne insérée entre les deux anneaux résonateurs fendus concentriques,

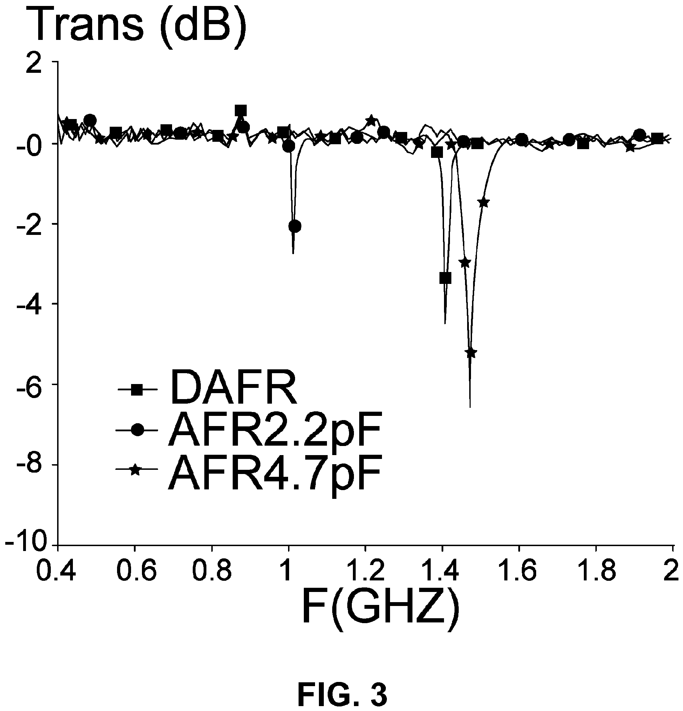

- la figure 3 est une représentation schématique de trois courbes donnant des valeurs de transmission en fonction des fréquences pour un transistor à haute mobilité électronique, le transistor étant associé à un anneau résonateur fendu selon deux formes différentes pour deux courbes et à deux anneaux résonateurs fendus pour la troisième courbe.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

En se référant à toutes les figures, la présente invention concerne un capteur sans fil de détection ou de mesure d'au moins un composant spécifique présent dans un mélange gazeux ou liquide. Le capteur de gaz comprend au moins une cellule de captage 1, 1a à transistor à haute mobilité électronique comportant une source et un drain avec une grille intercalée entre la source et le drain.

Un transistor à haute mobilité électronique porte le drain et la source à deux extrémités latérales opposées. Dans un mode de réalisation, entre la source et le drain s'étendent une couche semi-conductrice III-N nanostructurée et une couche de Al_{0,3}Ga_{0,7}N ou couche active d'interaction électrostatique, la couche semi-conductrice étant superposée à la couche de Al_{0,3}Ga_{0,7}N.

La couche semi-conductrice III-N nanostructurée supporte une ou des couches formant porte d'entrée pour les ions du ou des composants à détecter ou mesurer, par exemple des ions oxygène négatifs O²⁻ dissociés pour des oxydes d'azote NOx ou de l'oxygène O2 en créant une différence de potentiel. Cette couche ou ces couches formant porte d'entrée, avantageusement revêtues d'une couche d'oxydes, peuvent être en platine ou en tungstène.

Sous la couche de Al_{0,3}Ga_{0,7}N s'étend une grille reliant la source et le drain, la grille étant elle-même superposée à une couche de GaN, servant de substrat isolant.

Selon l'invention, ladite au moins une cellule de captage 1, 1a à transistor à haute mobilité électronique est associée au moins un anneau résonateur fendu 2, 2a d'au moins une fente 3, 3a respective et connecté entre, d'une part, le drain et, d'autre part, la grille ou la source de ladite au moins une cellule de captage 1, 1a.

Le capteur détecte un changement d'intensité ou de fréquence de résonance en fonction de la présence et/ou de la concentration dudit au moins un composant spécifique dans le mélange gazeux ou liquide.

Un anneau résonateur fendu 2, 2a est une structure produite artificiellement pour des méta-matériaux. Un tel anneau résonateur fendu 2, 2a délivre une réponse magnétique ou susceptibilité magnétique créant un fort couplage magnétique nécessaire à une application électromagnétique et qui n'était pas précédemment disponible pour des matériaux conventionnels.

Un anneau résonateur fendu 2, 2a peut être pris unitairement ou faire partie d'une structure de plusieurs anneaux résonateurs fendus 2, 2a. Une telle structure comprend alors des boucles formées par chacun des anneaux avec des fractionnements ou fentes 3, 3a dans les boucles. L'anneau ou les anneaux 2, 2a sont en métal amagnétique, comme par exemple du cuivre, et dans le cas d'une structure à plusieurs anneaux en gardant un espacement entre deux anneaux adjacents. L'anneau ou les anneaux 2, 2a peuvent être sous forme de couronne ou de forme carrée ou rectangulaire.

Un flux magnétique pénétrant dans l'anneau ou les anneaux résonateurs fendus 2, 2a va induire une rotation des courants dans les anneaux, qui produisent leur propre flux pour s'ajouter ou s'opposer au champ incident. L'anneau ou les anneaux résonateurs fendus 2, 2a peuvent être gravés sur un substrat diélectrique.

Le capteur peut comprendre une ou plusieurs cellules de captage. Chaque cellule de captage 1, 1a peut comprendre un ou plusieurs transistors à haute mobilité électronique associés à un ou plusieurs anneaux résonateurs fendus 2, 2a. Chaque anneau résonateur peut être fendu une seule fois ou de multiples fois.

Il existe une variété d'anneaux résonateurs fendus 2, 2a avec dans le cas d'une structure à plusieurs anneaux des structures périodiques. Les anneaux 2, 2a peuvent être imbriqués les uns aux autres, concentriques ou s'entourant les uns aux autres sans être concentriques. L'anneau ou les anneaux 2, 2a peuvent être sous forme d'une bague fendue respective simple en forme de spirale ou hélicoïdale.

Avantageusement, l'intensité ou la fréquence de résonance est fonction d'un ou des paramètres suivants pris unitairement ou en combinaison :
- d'une dimension de ladite au moins une fente 3, 3a dudit au moins un anneau résonateur fendu 2, 2a,
- d'une ou de dimensions du matériau constitutif dudit au moins un anneau résonateur fendu 2, 2a,
- quand ledit au moins un anneau résonateur fendu 2, 2a présente plusieurs fentes 3, 3a, d'un nombre de fentes 3, 3a pour ledit au moins un anneau résonateur fendu 2, 2a et,
- quand le capteur présente au moins deux anneaux résonateurs fendus 2, 2a, d'un nombre et d'une disposition des anneaux résonateurs fendus 2, 2a l'un par rapport à l'autre.

Sans être limitatif, pour une structure d'au moins deux anneaux résonateurs fendus 2, 2a, la disposition peut concerner l'arrangement des anneaux résonateurs fendus 2, 2a les uns par rapport aux autres, l'arrangement des fentes 3, 3a des anneaux résonateurs fendus 2, 2a les unes par rapport aux autres et/ou la distance entre les deux anneaux résonateurs fendus 2, 2a.

Dans une première forme de réalisation de la structure d'anneaux résonateurs fendus 2, 2a, cette première forme étant illustrée à la figure 1, le capteur peut présenter au moins deux anneaux résonateurs fendus 2, 2a et ladite au moins une cellule de captage 1 à transistor à haute mobilité électronique est insérée dans ladite au moins une fente 3 d'un desdits au moins deux anneaux résonateurs fendus 2.

Dans cette première forme de réalisation, ladite au moins une cellule de captage 1 à transistor à haute mobilité électronique peut être insérée dans ladite au moins une fente 3 de l'anneau résonateur fendu 2 le plus interne desdits au moins deux anneaux résonateurs fendus 2, 2a.

Dans une deuxième forme de réalisation de la structure d'anneaux résonateurs fendus 2, 2a, cette deuxième forme étant illustrée à la figure 2, le capteur peut présenter au moins deux anneaux résonateurs fendus 2, 2a et ladite au moins une cellule de captage 1a à transistor à haute mobilité électronique peut être insérée entre lesdits au moins deux anneaux résonateurs fendus 2, 2a.

Dans ce mode de réalisation, ladite au moins une cellule de captage 1a à transistor à haute mobilité électronique peut être sous forme d'une couronne concentrique auxdits au moins deux anneaux résonateurs fendus 2, 2a. La largeur de la couronne formée par la cellule de captage 1, 1a peut influer sur l'intensité ou la fréquence de résonance du capteur. La couronne peut être continue ou discontinue.

Pour tous les modes de réalisation, sans que cela soit limitatif, ladite au moins une cellule de captage 1, 1a à transistor à haute mobilité électronique peut être de forme rectangulaire, carrée ou en portion de couronne.

Le capteur peut présenter au moins deux anneaux résonateurs fendus 2, 2a concentriques en présentant un centre commun et lesdites au moins une fente 3, 3a desdits au moins deux anneaux résonateurs fendus 2, 2a sont alignées selon un diamètre de l'anneau résonateur fendu 2a le plus externe desdits au moins deux anneaux résonateurs fendus 2, 2a.

Le centre commun desdits au moins deux anneaux résonateurs fendus 2, 2a peut se trouver intercalé dans l'alignement entre lesdites au moins une fente 3, 3a des deux anneaux résonateurs fendus 2, 2a.

Selon les deux modes de réalisation concernant le placement du capteur par rapport aux deux anneaux résonateurs fendus 2, 2a, puisque la valeur de la capacité du capteur à transistor à haute mobilité électronique varie en fonction de la quantité du composant à détecter ou mesurer, le transistor peut donc être placé soit dans l'ouverture d'un anneau ou entre les anneaux en faisant varier la fréquence de résonance de la structure formée par les deux anneaux résonateurs fendus 2, 2a.

Dans cette conception, une faible variation de la capacité se traduit par un large décalage de fréquence, ce qui accroît la sensibilité de mesure du capteur. Elle a également l'avantage de ne nécessiter des contacts qu'entre la structure et le capteur.

L'invention concerne aussi un ensemble d'au moins deux capteurs sans fil de détection ou de mesure, chaque capteur détectant un composant spécifique respectif présent dans un mélange gazeux ou liquide.

Selon l'invention, lesdits au moins deux capteurs sont tels que précédemment mentionné, chacun desdits au moins deux capteurs présentant un changement d'intensité ou de fréquence de résonance en fonction de la présence et/ou de la concentration du composant spécifique respectif de chaque capteur dans le mélange gazeux ou liquide. Cet ensemble peut donc détecter spécifiquement au moins deux composants présents dans le mélange gazeux ou liquide.

L'invention concerne enfin une ligne d'échappement d'un moteur de combustion interne de véhicule automobile. La ligne d'échappement comprend un tel capteur, auquel cas un composant est spécifiquement détecté ou mesuré. En alternative, la ligne comprend un tel ensemble d'au moins deux capteurs sans fil de détection ou de mesure, auquel cas deux composants différents sont simultanément spécifiquement détectés et mesurés sans interférence entre eux.

Pour une telle ligne d'échappement, le mélange gazeux ou liquide précédemment mentionné est formé par des gaz d'échappement traversant la ligne d'échappement et ledit au moins un composant spécifique ou lesdits au moins deux composants spécifiques étant respectivement un ou des polluants contenus dans les gaz d'échappement, par exemple un oxyde d'azote du type NO ou NO2 qui peut alors être isolément détecté ou mesuré sans interférence avec les aux autres oxydes d'azote NOx ou avec l'ammoniac NH3, ce qui faussait les détections précédemment établies selon l'état de la technique.

La figure 3 montre trois courbes de réaction sélective de trois capteurs de configuration différente. En ordonnée, il est suivi une puissance de transmission Trans en décibels ou dB et en abscisse une gamme de fréquence F en gigahertz ou GHz. La réponse de résonance des trois capteurs comparés DAFR, AFR2.2pF et AFR4.7pF est spécifique à chaque capteur avec des puissances de transmission Trans plus ou moins fortes.

La courbe avec des carrés DAFR illustre un capteur avec deux anneaux résonateurs fendus 2, 2a tandis que les deux autres courbes concernent des capteurs avec un anneau résonateur fendu 2, 2a simple.

L'invention n'est nullement limitée aux modes de réalisation décrits et illustrés qui n'ont été donnés qu'à titre d'exemples.

## Revendications

1. Capteur sans fil de détection ou de mesure d'au moins un composant spécifique présent dans un mélange gazeux ou liquide, le capteur de gaz comprenant au moins une cellule de captage (1, 1a) à transistor à haute mobilité électronique comportant une source et un drain avec une grille intercalée entre source et drain, **caractérisé en ce que** ladite au moins une cellule de captage (1, 1a) à transistor à haute mobilité électronique est associée au moins un anneau résonateur fendu (2, 2a) d'au moins une fente (3, 3a) respective et connecté entre, d'une part, le drain et, d'autre part, la grille ou la source de ladite au moins une cellule de captage (1, 1a), le capteur détectant un changement d'intensité ou de fréquence de résonance en fonction de la présence et/ou de la concentration dudit au moins un composant spécifique dans le mélange gazeux ou liquide.

2. Capteur selon la revendication 1, dans lequel l'intensité ou la fréquence de résonance est fonction d'un ou des paramètres suivants pris unitairement ou en combinaison :
- d'une dimension de ladite au moins une fente (3, 3a) dudit au moins un anneau résonateur fendu (2, 2a),
- d'une ou de dimensions du matériau constitutif dudit au moins un anneau résonateur fendu (2, 2a),
- quand ledit au moins un anneau résonateur fendu (2, 2a) présente plusieurs fentes (3, 3a), d'un nombre de fentes (3, 3a) pour ledit au moins un anneau résonateur fendu (2, 2a) et,
- quand le capteur présente au moins deux anneaux résonateurs fendus (2, 2a), d'un nombre et d'une disposition des anneaux résonateurs fendus (2, 2a) l'un par rapport à l'autre.

3. Capteur selon la revendication 1 ou 2, dans lequel le capteur présente au moins deux anneaux résonateurs fendus (2, 2a) et ladite au moins une cellule de captage (1) à transistor à haute mobilité électronique est insérée dans ladite au moins une fente (3) d'un desdits au moins deux anneaux résonateurs fendus (2).

4. Capteur selon la revendication 3, dans lequel ladite au moins une cellule de captage (1) à transistor à haute mobilité électronique est insérée dans ladite au moins une fente (3) de l'anneau résonateur fendu (2) le plus interne desdits au moins deux anneaux résonateurs fendus (2, 2a).

5. Capteur selon la revendication 1 ou 2, dans lequel le capteur présente au moins deux anneaux résonateurs fendus (2, 2a) et ladite au moins une cellule de captage (1) à transistor à haute mobilité électronique est insérée entre lesdits au moins deux anneaux résonateurs fendus (2, 2a).

6. Capteur selon la revendication 5, dans lequel ladite au moins une cellule de captage (1a) à transistor à haute mobilité électronique est sous forme d'une couronne concentrique auxdits au moins deux anneaux résonateurs fendus (2, 2a).

7. Capteur selon l'une quelconque des revendications précédentes, dans lequel ladite au moins une cellule de captage (1, 1a) à transistor à haute mobilité électronique est de forme rectangulaire, carrée ou en portion de couronne.

8. Capteur selon l'une quelconque des revendications précédentes, dans lequel le capteur présente au moins deux anneaux résonateurs fendus (2, 2a) concentriques en présentant un centre commun et lesdites au moins une fente (3, 3a) desdits au moins deux anneaux résonateurs fendus (2, 2a) sont alignées selon un diamètre de l'anneau résonateur fendu (2a) le plus externe desdits au moins deux anneaux résonateurs fendus (2, 2a), le centre commun desdits au moins deux anneaux résonateurs fendus (2, 2a) se trouvant intercalé dans l'alignement entre lesdites au moins une fente (3, 3a) des deux anneaux résonateurs fendus (2, 2a).

9. Ensemble d'au moins deux capteurs sans fil de détection ou de mesure, chaque capteur détectant un composant spécifique respectif présent dans un mélange gazeux ou liquide, **caractérisé en ce que** lesdits au moins deux capteurs sont selon l'une quelconque des revendications précédentes, chacun desdits au moins deux capteurs présentant un changement d'intensité ou de fréquence de résonance en fonction de la présence et/ou de la concentration du composant spécifique respectif de chaque capteur dans le mélange gazeux ou liquide.

10. Ligne d'échappement d'un moteur de combustion interne de véhicule automobile, **caractérisée en ce qu'**elle comprend un capteur selon l'une quelconque des revendications 1 à 8 ou un ensemble d'au moins deux capteurs sans fil de détection ou de mesure selon la revendication 9, le mélange gazeux ou liquide étant formé par des gaz d'échappement traversant la ligne d'échappement et ledit au moins un composant spécifique ou lesdits au moins deux composants spécifiques étant respectivement un ou des gaz contenus dans les gaz d'échappement, notamment des NOx.

## Patentansprüche

1. Drahtloser Sensor zum Detektieren oder Messen mindestens einer bestimmten Komponente, die in einer gasförmigen oder flüssigen Mischung vorhanden ist, wobei der Gassensor mindestens eine Sensorzelle (1, 1a) mit einem Transistor mit hoher Elektronenbeweglichkeit aufweist, der eine Source und einen Drain mit einem zwischen Source und Drain angeordneten Gate aufweist, **dadurch gekennzeichnet, dass** die mindestens eine Sensorzelle (1, 1a) mit Transistor mit hoher Elektronenbeweglichkeit mindestens einem Spaltresonatorring (2, 2a) mit mindestens einem entsprechenden Spalt (3, 3a) zugeordnet ist, der zwischen einerseits dem Drain und andererseits dem Gate oder der Source der mindestens einen Sensorzelle (1, 1a) angeschlossen ist, wobei der Sensor eine Änderung einer Intensität oder einer Frequenz einer Resonanz in Abhängigkeit vom Vorhandensein und/oder der Konzentration der mindestens einen bestimmten Komponente in der gasförmigen oder flüssigen Mischung erfasst.

2. Sensor nach Anspruch 1, wobei die Intensität oder die Frequenz der Resonanz eine Funktion von einem oder mehreren der folgenden Parameter ist, einzeln oder in Kombination:
- einer Abmessung des mindestens einen Spaltes (3, 3a) des mindestens einen Spaltresonatorrings (2, 2a),
- einer Abmessung oder Abmessungen des Materials, aus dem der mindestens eine Spaltresonatorring (2, 2a) gebildet ist,
- wenn der mindestens eine Spaltresonatorring (2, 2a) eine Mehrzahl von Spalten (3, 3a) aufweist, einer Anzahl von Spalten (3, 3a) für den mindestens einen Spaltresonatorring (2, 2a), und
- wenn der Sensor mindestens zwei Spaltresonatorringe (2, 2a) aufweist, einer Anzahl und einer Anordnung der Spaltresonatorringe (2, 2a) relativ zueinander.

3. Sensor nach Anspruch 1 oder 2, wobei der Sensor mindestens zwei Spaltresonatorringe (2, 2a) aufweist und die mindestens eine Sensorzelle (1) mit Transistor mit hoher Elektronenbeweglichkeit in den mindestens einen Spalt (3) eines der mindestens zwei Spaltresonatorringe (2) eingesetzt ist.

4. Sensor nach Anspruch 3, wobei die mindestens eine Sensorzelle (1) mit Transistor mit hoher Elektronenbeweglichkeit in den mindestens einen Spalt (3) des innersten der mindestens zwei Spaltresonatorringe (2, 2a) eingesetzt ist.

5. Sensor nach Anspruch 1 oder 2, wobei der Sensor mindestens zwei Spaltresonatorringe (2, 2a) aufweist und die mindestens eine Sensorzelle (1) mit Transistor mit hoher Elektronenbeweglichkeit zwischen den mindestens zwei Spaltresonatorringen (2, 2a) eingesetzt ist.

6. Sensor nach Anspruch 5, wobei die mindestens eine Sensorzelle (1a) mit Transistor mit hoher Elektronenbeweglichkeit die Form eines Kranzes hat, der konzentrisch zu den mindestens zwei Spaltresonatorringen (2, 2a) ist.

7. Sensor nach einem der vorhergehenden Ansprüche, wobei die mindestens eine Sensorzelle (1, 1a) mit Transistor mit hoher Elektronenbeweglichkeit eine rechteckige, quadratische oder teilkranzartige Form besitzt.

8. Sensor nach einem der vorhergehenden Ansprüche, wobei der Sensor mindestens zwei konzentrische Spaltresonatorringe (2, 2a) mit einem gemeinsamen Zentrum aufweist und der mindestens eine Spalt (3, 3a) der mindestens zwei Spaltresonatorringe (2, 2a) entlang eines Durchmessers des äußersten Spaltresonatorrings (2a) der mindestens zwei Spaltresonatorringe (2, 2a) ausgerichtet ist, wobei das gemeinsame Zentrum der mindestens zwei Spaltresonatorringe (2, 2a) in der Ausrichtung zwischen dem mindestens einen Spalt (3, 3a) der zwei Spaltresonatorringe (2, 2a) angeordnet ist.

9. Anordnung von mindestens zwei drahtlosen Detektions- oder Messsensoren, wobei jeder Sensor eine jeweilige bestimmte Komponente detektiert, die in einem gasförmigen oder flüssigen Gemisch vorhanden ist, **dadurch gekennzeichnet, dass** die mindestens zwei Sensoren nach einem der vorhergehenden Ansprüche ausgebildet sind, wobei jeder der mindestens zwei Sensoren eine Änderung der Intensität oder der Frequenz einer Resonanz als eine Funktion des Vorhandenseins und/oder der Konzentration der jeweiligen bestimmten Komponente jedes Sensors in dem gasförmigen oder flüssigen Gemisch anzeigt.

10. Abgasleitung eines Kraftfahrzeug-Verbrennungsmotors, **dadurch gekennzeichnet, dass** diese einen Sensor nach einem der Ansprüche 1 bis 8 oder eine Anordnung von mindestens zwei drahtlosen Detektions- oder Messsensoren nach Anspruch 9 aufweist, wobei das gasförmige oder flüssige Gemisch durch Abgase gebildet wird, die durch die Abgasleitung strömen, und wobei die mindestens eine bestimmte Komponente oder die mindestens zwei bestimmten Komponenten jeweils ein oder mehrere in den Abgasen enthaltene Gase, insbesondere NOx, sind.

## Claims

1. Wireless sensor for detection or measurement of at least one specific component present in a gaseous or liquid mixture, the gas sensor comprising at least one sensor cell (1, 1a) having a high-electron-mobility transistor comprising a source and a drain with a gate intercalated between the source and the drain, **characterized in that** said at least one sensor cell (1, 1a) having a high-electron-mobility transistor is associated with at least one split-ring resonator (2, 2a) with at least one respective slit (3, 3a) and connected between, on the one hand, the drain and on the other hand, the gate or the source of said at least one sensor cell (1, 1a), the sensor detecting a change in the intensity or the frequency of resonance as a function of the presence and/or of the concentration of said at least one specific component in the gaseous or liquid mixture.

2. Sensor according to claim 1, in which the intensity or the frequency of resonance is a function of one or more of the following parameters, alone or in combination:
- a dimension of said at least one slit (3, 3a) of said at least one split-ring resonator (2, 2a),
- a dimension or dimensions of the material constituting said at least one split-ring resonator (2, 2a),
- when said at least one split-ring resonator (2, 2a) has several slits (3, 3a), a number of slits (3, 3a) for said at least one split-ring resonator (2, 2a) and,
- when the sensor has at least two split-ring resonators (2, 2a), a number and position of the split-ring resonators (2, 2a) with respect to one another.

3. Sensor according to claim 1 or 2, in which the sensor has at least two split-ring resonators (2, 2a) and said at least one sensor cell (1) having a high-electron-mobility transistor is inserted into said at least one slit (3) of one of said at least two split-ring resonators (2).

4. Sensor according to claim 3, in which said at least one sensor cell (1) having a high-electron-mobility transistor is inserted into said at least one slit (3) of the innermost split-ring resonator (2) of said at least two split-ring resonators (2, 2a).

5. Sensor according to claim 1 or 2, in which the sensor has at least two split-ring resonators (2, 2a) and said at least one sensor cell (1) having a high-electron-mobility transistor is inserted between said at least two split-ring resonators (2, 2a).

6. Sensor according to claim 5, in which said at least one sensor cell (1a) having a high-electron-mobility transistor is in the form of a crown concentric with said at least two split-ring resonators (2, 2a).

7. Sensor according to any one of the preceding claims, in which said at least one sensor cell (1, 1a) having a high-electron-mobility transistor is rectangular, square or as a portion of a crown.

8. Sensor according to any one of the preceding claims, in which the sensor has at least two concentric split-ring resonators (2, 2a) having a common centre and said at least one slit (3, 3a) of said at least two split-ring resonators (2, 2a) is/are aligned according to a diameter of the outermost split-ring resonator (2a) of said at least two split-ring resonators (2, 2a), the common centre of said at least two split-ring resonators (2, 2a) being intercalated, aligned between said at least one slit (3, 3a) of the two split-ring resonators (2, 2a).

9. Assembly of at least two wireless sensors for detection or measurement, each sensor detecting a respective specific component present in a gaseous or liquid mixture, **characterized in that** said at least two sensors are according to any one of the preceding claims, each of said at least two sensors showing a change in intensity or frequency of resonance as a function of the presence and/or the concentration of the respective specific component of each sensor in the gaseous or liquid mixture.

10. Exhaust line of an internal combustion engine of a motor vehicle, **characterized in that** it comprises a sensor according to any one of claims 1 to 8 or an assembly of at least two wireless sensors for detection or measurement according to claim 9, the gaseous or liquid mixture being formed by exhaust gases passing through the exhaust line and said at least one specific component or said at least two specific components being respectively a gas or gases contained in the exhaust gases, in particular NOx gases.
